# EUROPEAN PATENT SPECIFICATION

(11) **EP 0 306 203 B1**
(45) Date of publication and mention of the grant of the patent: **18.05.1994**
(21) Application number: 88307804.0
(22) Date of filing: 23.08.1988
(51) Int. Cl.: G09G 3/36

(54) **A method of addressing a ferroelectric liquid crystal display**
Verfahren zum Steuern einer ferroelektrischen Flüssigkristallanzeige
Méthode d'adressage d'un dispositif d'affichage à cristaux liquides ferroélectriques

(30) Priority: 04.09.1987 GB 8720856
(43) Date of publication of application: 08.03.1989
(73) Proprietor: NORTHERN TELECOM LIMITED, Montreal, Quebec H2Y 3Y4 (CA); THE SECRETARY OF STATE FOR DEFENCE, London SW1A 2HB (GB); THORN EMI plc, London W1R 9AH (GB)
(72) Inventor: Saunders, Francis Carolyn, Suckley Worcester, WR6 5DU (GB); Surguy, Paul William Herbert, Uxbridge Middlesex (GB); Bone, Matthew Francis, Hertfordshire , CM23 3NM (GB); Hughes, Johnathan Rennie, St. John's Worcester, WR2 4JW (GB); Coulson, Ian, Maidenhead Berkshire, SL6 7HQ (GB); Ross, Peter William, Stanstead Essex, CM24 8EA (GB)
(74) Representative: Hurst, Richard Arthur Alexander

(56) References cited:
- GB-A- 2 173 336
- GB-A- 2 173 629

## Description

This invention relates to the addressing of ferroelectric liquid crystal cells.

In a matrix-type display device comprising a liquid crystal layer, the pixels of the matrix are defined by areas of overlap between members of a first set of electrodes on one side of the liquid crystal layer and members of a second set of electrodes on the other side of the liquid crystal layer. An electric field is applied across the molecules of a pixel to determine the optical state of that pixel by the generation of voltages at the member of the first set of electrodes and the member of the second set of electrodes that define the pixel.

For the addressing on a line-by-line basis of a liquid crystal cell comprising a twisted nematic cell between two layers of strip electrodes, a strobe pulse may be applied in turn to the members of the first set of electrodes, termed the row electrodes while data pulses are applied in parallel to the members of the second set of electrodes, termed the column electrodes. These pulses are bursts of alternating potential in order to avoid electrochemical degradation effects, and the alternating potential of the data pulses is arranged to be exactly in phase with the alternating potential of the strobe pulses for data pulses of one data significance, and to be in exact antiphase for data pulses of the other data significance. If the strobe pulse and data pulse voltages respectively alternate between ± V_{S} and ± V_{D}, and if all the row electrodes other than the row electrode currently being strobed with ± V_{S} are maintained at 0 volts, then it will be seen that the pixels of the row currently being strobed will have voltages of ± (V_{S} + V_{D}) or ± (V_{S} - V_{D}) developed across them according to the data significance of the data pulses, while all the remaining pixels will be exposed to ± V_{D}. The liquid crystal cell exhibits a voltage threshold in its operation, and hence the magnitudes of V_{S} and V_{D} are chosen so that the average rms of one period of ± (V_{S} + V_{D}) and N-1 of ± V_{D} is sufficient to drive the pixel on, but the average rms of one period of ± (V_{S} - V_{D}) and N-1 of ± V_{D} is insufficient.

A similar sort of voltage threshold effect was reported by N.A. Clark et al in a paper entitled 'Ferro-electric Liquid Crystals Electro-Optics Using the Surface Stabilised Structure' appearing in Mol. Cryst. Liq. Cryst. 1983 Volume 94 pages 213 to 234, and following publication of that paper a number of line-by-line matrix addressing schemes have been described e.g. in UK Patent Applications Nos. GB 2173336A and GB 2173629A. These addressing schemes have not used pulses of alternating potential because the ferroelectric dipole, unlike the induced dipole of a twisted nematic or any other type of non-ferroelectric cell, interacts with an applied electric field in a manner that is different according to whether the applied field points in any given direction or in the exactly opposite direction. For this reason these schemes have used bipolar data pulses acting in conjunction with unipolar or bipolar strobe pulses. The data pulses are conveniently arranged to be charge balanced in order to avoid electrochemical degradation effects and, if unipolar strobe pulses are used steps are taken to restore the requisite long term charge balance, either by periodically changing the polarity of the unipolar strobe pulses or by some other means. Each of these schemes is concerned with choosing strobe and data pulse voltages so that on the one hand a pixel is maintained in, or switched into, one bistable state by the development of a potential difference across the thickness of the pixel of + (V_{S} + V_{D}) and is maintained in or switched into, the other bistable state by the development of the oppositely directly potential difference - (V_{S} + V_{D}), and so that on the other hand potential differences of + (V_{S} - V_{D}), - (V_{S} - V_{D}), + V_{D} and - V_{D} are none of them sufficient to effect switching.

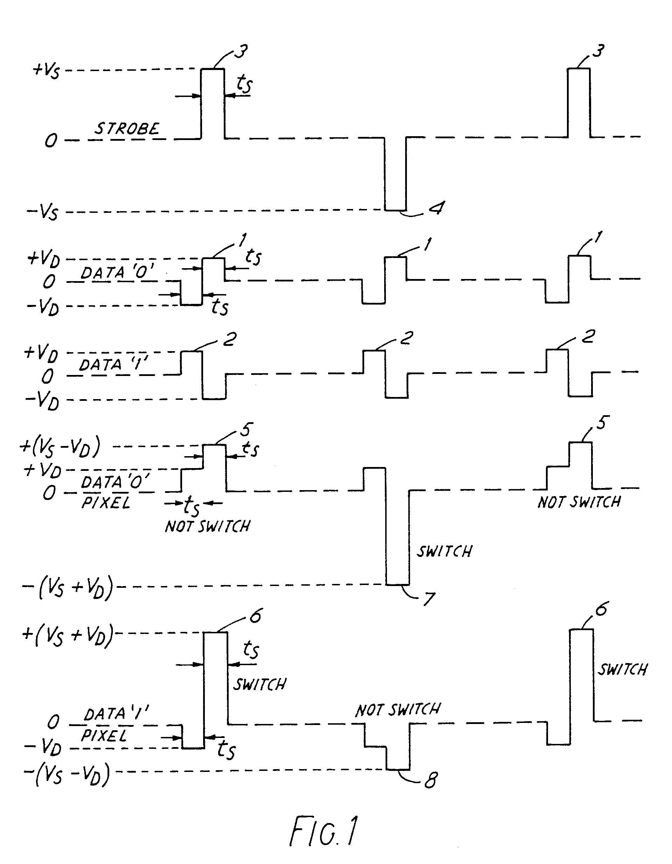

By way of specific example Figure 1 depicts the waveforms employed in a line-by-line addressing scheme similar to one of the addressing schemes specifically described in GB 2173629A. This uses symmetric bipolar data pulses 1, 2 to co-act with positive-going and negative-going unipolar strobe pulses 3 and 4. Data is entered line-by-line by applying a strobe pulse to each of a set of row electrodes in turn while the data pulses are applied in parallel to a set of column electrodes. Data pulse 1, arbitrarily designated a data 'O' pulse, comprise a voltage excursion to - V_{D} for a duration tₛ followed immediately by a voltage excursion to +V_{D} for a further duration tₛ. Data pulse 2, arbitrarily designated a data '1' pulse, is similar to data pulse 1, but the order of the voltage excursions is reversed. Strobe pulse 3 comprises a voltage excursion to + V_{S} for a duration t_{S}, while strobe pulse 4 comprises a voltage excursion to - V_{S}, also of duration tₛ. In principle the strobe pulses can be synchronised either with the first voltage excursions of the data pulses or with the second voltage excursion; synchronisation with the second voltage excursion is exemplified in Figure 1. A pixel addressed with the coincidence of a data 'O' pulse 1 and a positive-going strobe pulse 3 is exposed to a waveform as depicted at 5 which has a maximum voltage magnitude of (V_{S} - V_{D}) and so does not effect switching. A pixel addressed with the coincidence of a data '1' pulse 2 and a positive-going strobe pulse 3 is exposed to a waveform as depicted at 6 which has a maximum voltage magnitude of (V_{S} + V_{D}) and so can effect switching from one of the stable states to the other but not switching in the reverse direction. Switching in the reverse direction is accomplished with the aid of the oppositely directed strobe pulse 4, the coincidence of this with a data 'O' pulse 1 exposing a pixel to the waveform as depicted at 7 which has a maximum voltage magnitude of (V_{S} + V_{D}). However, a pixel addressed with the coincidence of a data '1' pulse 2 and the negative-going strobe pulse 4 is exposed to a waveform as depicted at 8 which has a maximum voltage magnitude of (V_{S} - V_{D}) and so does not effect switching.

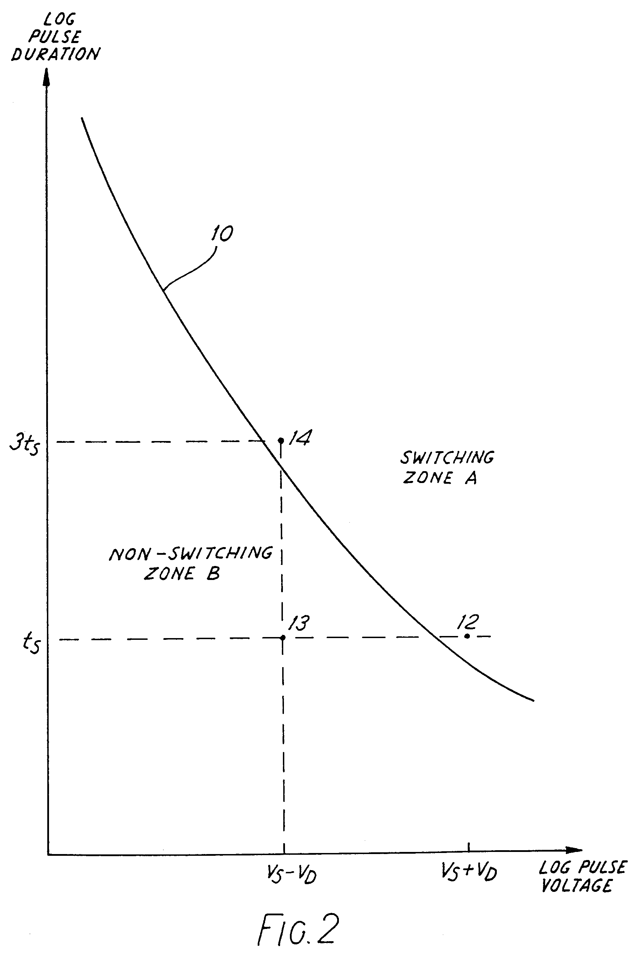

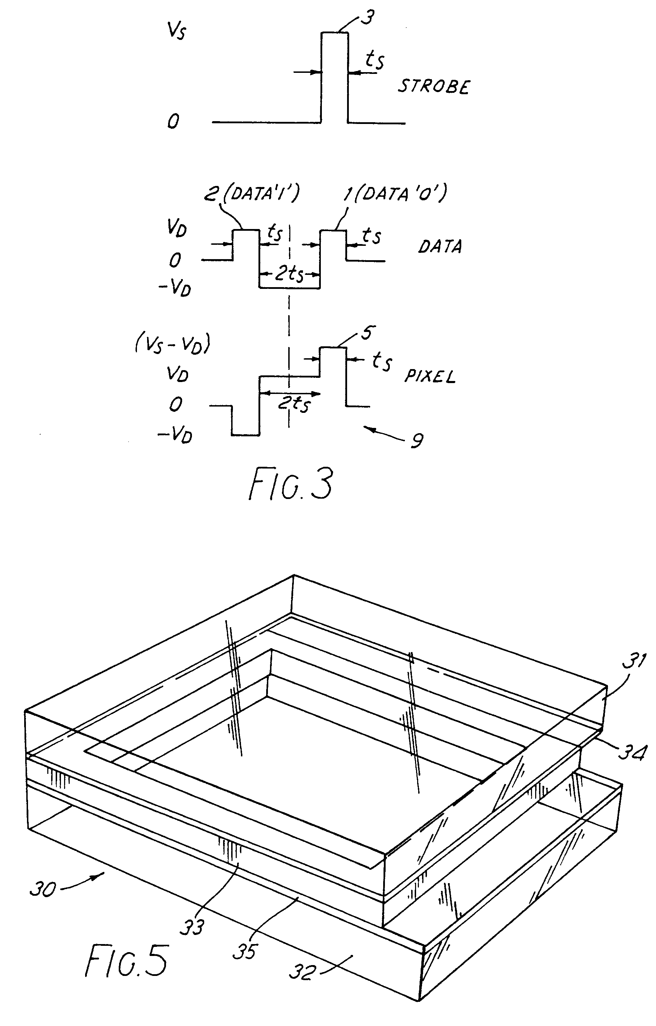

The switching of a ferroelectric cell pixel is dependent not only upon the voltage to which that pixel is exposed but also upon the duration for which that voltage is maintained. A characteristic is depicted at 10 in Figure 2 in which log switching voltage duration (response time) is plotted as a function of log switching voltage magnitude. This characteristic separates zone A, the zone in which the switching stimulus is sufficient to effect switching, from zone B, the zone in which the stimulus does not effect switching. For a particular pulse duration tₛ there is no apparent problem in choosing appropriate values of the strobe and data pulse voltages V_{S} and V_{D} so that (V_{S} + V_{D}) lies safely within zone A. Then, by choosing a value of the data pulse voltage V_{D} that is not too small in relation to the value of the strobe pulse voltage V_{S}, it is evident that it is possible to arrange that (V_{S} - V_{D}) lies safely within zone B for a pulse duration tₛ. It must be noted however that the coincidence of a data 'O' pulse 1 and a positive-going strobe pulse 3 does not expose the pixel to an isolated pulse of amplitude (V_{S} - V_{D}), and duration tₛ, but rather the waveform 5 in which the pulse of amplitude (V_{S} - V_{D}) and duration tₛ is immediately preceded by a pulse of the same sign of amplitude V_{D} and also of duration tₛ. Furthermore it can be seen that, as shown in Figure 3, if this data 'O' pulse, were to have been immediately preceded by a data '1' pulse, the pixel is exposed to a waveform 9 comprising a pulse of duration tₛ and amplitude (V_{S} - V_{D}) which is immediately preceded by a pulse of duration 2tₛ and amplitude V_{D}.

Suppose by way of example the values of the strobe and data pulse voltages V_{S} and V_{D} are as represented in Figure 2, then the coincidence of a positive-going strobe pulse 3 with a data '1' pulse 2 exposes the pixel to a waveform 6 whose (V_{S} + V_{D}) component for a duration tₛ is sufficient to provide a switching stimulus corresponding to the operating point 12 lying safely within the switching zone A. An isolated pulse of amplitude (V_{S} - V_{D}) for duration tₛ would provide a switching pulse corresponding to the point 13 lying safely within the non-switching zone B, but, as explained in the preceding paragraph, addressing the pixel by coincidence of positive-going strobe pulse 3 with a data 'O' pulse does not produce an isolated (V_{S} - V_{D}) pulse but the waveform 5, and so the effective pulse corresponds to some real operating point above the level of point 13. If the values of V_{S} and V_{D} have been chosen so that ${\text{V}}_{\text{S}} {\text{= 2V}}_{\text{D}}$ , then ${\text{V}}_{\text{D}} {\text{= (V}}_{\text{S}} {\text{- V}}_{\text{D}} \text{)}$ , and the effective pulse will provide a real operating point vertically above point 13. In the case that ${\text{V}}_{\text{S}} {\text{= 2V}}_{\text{D}}$ and the data 'O' pulse is immediately preceded by a data '1' pulse to produce the waveform 9 of Figure 3, the effective pulse will provide a real operating point that is vertically above point 13 at the point 14 where the (V_{S} - V_{D}) abscissa intersects the 3tₛ ordinate. Depending upon the gradient of the characteristic curve this real operating point may be within the switching zone A (as shown in Figure 2) rather than, as desired, within the non-switching zone B. Depending upon the precise shape of the characteristic curve of the specific ferroelectric material in question, the choice of ${\text{V}}_{\text{S}} {\text{= 2V}}_{\text{D}}$ may be well removed from the ratio giving the best prospect of achieving the requisite discrimination between pixels addressed for switching and those addressed for remaining in the same state. In practice it may be found that problems of obtaining discrimination are eased by choosing to make V_{D} smaller than V_{S} by a factor typically in the range four to six, rather than about two. However there are other considerations which militate against using too small a value of V_{D}. One of these considerations is the fact that the data stream provides an alternating potential which tends to stabilise the pixels in their fully switched states, preventing them from relaxing into intermediate stable states which are less optically distinct from each other than the fully switched states. The result is that, as a practical matter, with many ferroelectric liquid crystal media it is difficult or impossible to choose values of V_{S} and V_{D} that provide good discrimination between switching with waveforms 6 and 7 of voltage magnitude (V_{S} + V_{D}) and not switching with waveforms 5 and 8 of voltage magnitude (V_{S} - V_{D}).

It is an object of the present invention to provide a method of addressing a ferroelectric liquid crystal display which at least alleviates the problems outlined hereinbefore.

A method of addressing a matrix-array type liquid crystal cell with a layer of ferroelectric liquid crystal material having a plurality of pixels defined by areas of overlap between members of a first set of electrodes on one side of the layer and members of a second set of electrodes on the other side of the layer, each of the pixels being switchable between a first and a second optical state by application of a voltage thereacross for a minimum duration, dependent on the magnitude of the voltage across the pixels in which method a strobe voltage is serially applied to the members of the first set of electrodes and data voltages are simultaneously applied in parallel to the second set of electrodes to produce resultant voltages across the pixels corresponding to a given selected member of the first set of electrodes and thereby switch or non-switch these pixels in dependence upon whether the corresponding data voltages are of first or second kinds respectively, characterised in that the liquid crystal material is such that the dependence of the minimum duration on the magnitude of the voltage across the pixels exhibits a minimum at a particular voltage, in that the combination of the strobe voltage and a data voltage of the first kind produces a resultant switching pulse of a given voltage magnitude and a given duration, and in that the combination of the strobe voltage and a data voltage of the second kind produces a non-switching pulse of a voltage magnitude greater than the given voltage magnitude and of a duration less than or equal to the given duration and wherein the voltage magnitude of the non-switching pulse is equal to or greater than the magnitude of the particular voltage.

For the avoidance of doubt, it is hereby stated that in the claims defining the present invention and in the specific description of an embodiment of the present invention and in the specific description of an embodiment of the present invention, the term 'pulse' is used in the sense of a non-zero voltage excursion which need not have a constant voltage magnitude but is of one polarity.

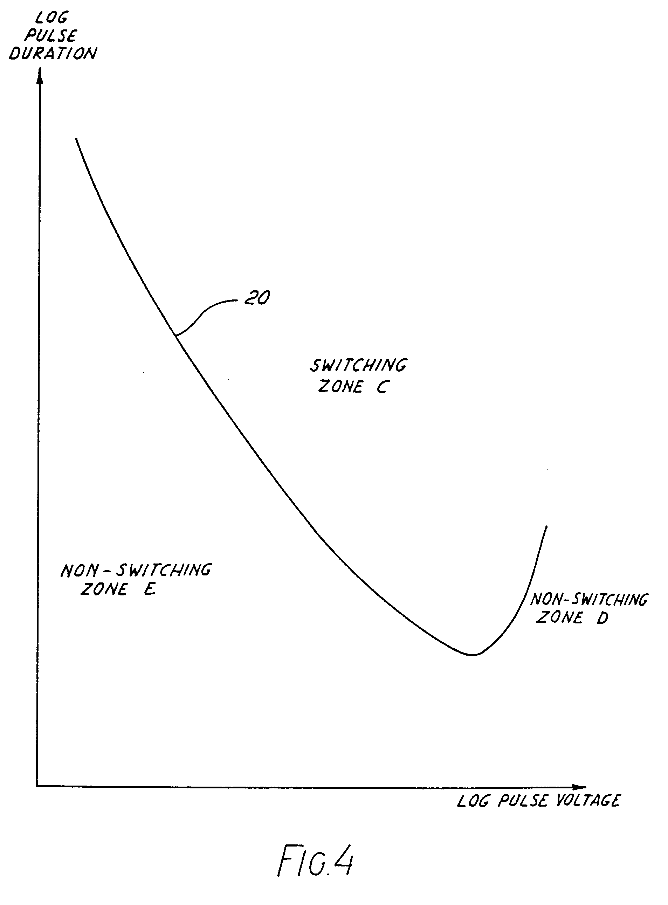

In contrast to the prior art which discloses methods in which the switching pulse has a greater voltage magnitude than the non-switching pulse, the present invention provides a method in which the non-switching pulse has a voltage magnitude greater than that of the switching pulse. The reason that this is possible is because it has recently been found that some ferroelectric liquid crystal materials exhibit or can be caused to exhibit a characteristic curve of the general form depicted by curve 20 of Figure 4 which is not monotonic but exhibits a minimum, and consequently a positive gradient portion. Thus, in contrast to the prior art which used a characteristic having a negative gradient, the present invention uses the positive gradient portion of a characteristic in which the response time shows a minimum at a particular voltage. This improves the discrimination between the switching and non-switching waveforms.

In particular, in the present invention, pixels addressed by the coincidence of a strobe pulse of voltage magnitude V_{S} and a data pulse of voltage magnitude V_{D} can be switched when those pulses are such as to combine to develop a potential of ± (V_{S} - V_{D}) but not be switched when they are such as to combine to develop a potential of ± (V_{S} + V_{D}).

An embodiment of the invention will now be described, by way of example only, and with reference to the accompanying drawings in which:
Figure 1 depicts waveforms employed in addressing a liquid crystal cell on a co-ordinate basis and in a known method;
Figure 2 is a graph depicting a switching characteristic relating pulse duration with pulse amplitude necessary to effect switching in a known method;
Figure 3 depicts waveforms produced in the scheme of Figure 1;
Figure 4 is a graph depicting the switching characteristic of a ferroelectric liquid crystal material;
Figure 5 depicts a schematic perspective view of a liquid crystal cell;
Figure 6 depicts a schematic plan view of a liquid crystal cell showing its matrix-array;
Figure 7 depicts waveforms employed in a method of addressing a liquid crystal cell provided in accordance with the present invention;
Figure 8 is a graph depicting the switching characteristics of a ferroelectric liquid crystal material;
Figure 9 depicts waveforms produced in the scheme of Figure 7;
Figure 10 shows, for clarity, the definition of the terms used in the theory leading to Equation (1);
Figure 11 is a graph depicting how the switching characteristic of a particular material varies as a function of Pₛ;
Figure 12 is a graph depicting how the switching characteristic is modified by the presence of a.c. stabilisation, and
Figure 13 is another graph depicting the characteristic of a ferroelectric liquid crystal material.

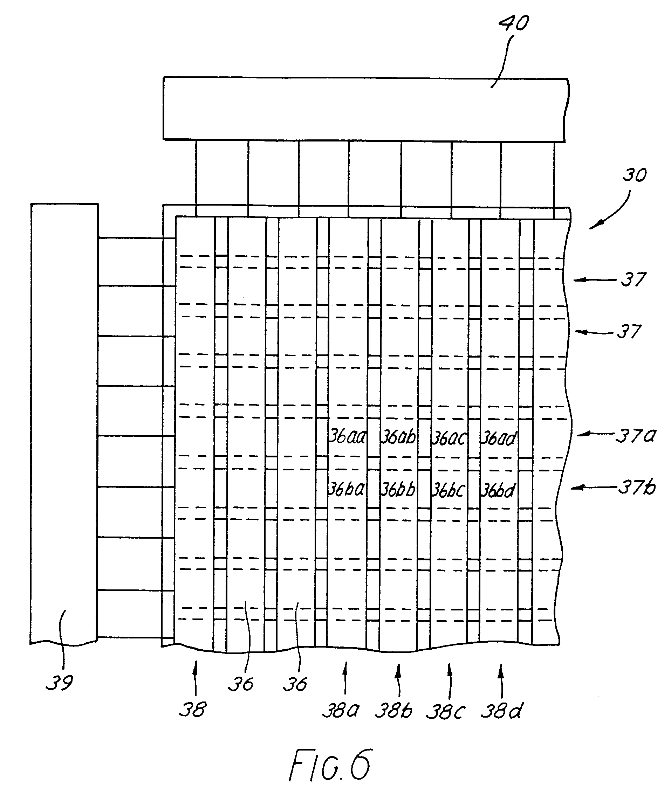

Referring now to Figure 5, this shows a schematic perspective view of a liquid crystal cell 30. A hermetically sealed envelope for a liquid crystal layer is formed by securing together two glass sheets 31 and 32 with a perimeter seal 33. The inward facing surfaces of the two sheets carry transparent electrode layers 34 and 35 of indium thin oxide, and one or sometimes both of these electrode layers is covered within the display area defined by the perimeter seal with a polymer layer (not shown), such as nylon, provided for molecular alignment purposes. The nylon layer is rubbed in a single direction so that, when a liquid crystal is brought into contact with it, it will tend to promote planar alignment of the liquid crystal molecules in the direction of the rubbing. If the cell has polymer layers on both its inward facing major surfaces, it is assembled with the rubbing directions aligned substantially parallel with each other. Before the electrode layers 34 and 35 are covered with the polymer, each one is patterned to define a set of strip electrodes (not shown) that individually extend across the display area and on out to beyond the perimeter seal to provide contact areas to which terminal connection may be made. The thickness of the liquid crystal layer contained within the resulting envelope is determined by a light scattering of polymeric spheres of uniform diameter throughout the area of the cell. Conveniently the cell is filled by applying a vacuum to an aperture (not shown) through one of the glass sheets in one corner of the area enclosed by the perimeter seal so as to cause the liquid crystal medium to enter the cell by way of another aperture (not shown) located in the diagonally opposite corner. (Subsequent to the filling operation the two apertures are sealed). The filling operation is carried out with the filling material heated into its nematic or isotropic phase so as to reduce its viscosity to a suitably low value. It will be noted that the basic construction of the cell is similar to that of for instance a conventional twisted nematic, except of course for the parallel alignment of the rubbing directions.

Typically the thickness of the perimeter seal 33, and hence of the liquid crystal layer, as defined by the polymeric spheres, is between 1.5 to 3µm, but thinner or thicker layer thicknesses may be required to suit particular applications. A preferred thickness is 2µm. A suitable material for the filling is the smectic C eutectic marketed by BDH of Poole in Dorset under the designation of SCE 3. This material, which exhibits negative dielectric anisotropy at least over the frequency range from 1kHz to 40kHz, on cooling from the isotropic phase passes through the smectic A phase into the smectic C phase. In the case of a 2µm thick liquid crystal layer confined between the rubbed surfaces, the entry of the material into the smectic A phase causes the smectic layers to be formed with bookshelf alignment (layers extending in planes to which the rubbing direction is normal), and this alignment of the smectic layers appears to be preserved when the material makes the transition into the smectic C phase.

Figure 6 is a schematic plan representation of part of the matrix-array type liquid crystal cell 30 of Figure 5. Pixels 36 of the matrix are defined by areas of overlap between members 37 of a first set of row electrodes in the electrode layer 34 and members 38 of a second set of column electrodes in the electrode layer 35. For each pixel, the electric field thereacross determines the state and hence alignment of the liquid crystal molecules. Parallel polarizers (not shown) are provided at either side of the cell 30. The relative orientation of the polarizers determines whether or not light can pass through a pixel in a given state. Accordingly for a given orientation of the polarizers, each pixel has a first and a second optically distinguishable state provided by the two bistable states of the liquid crystal molecules in that pixel.

Voltage waveforms are applied to the row electrodes 37 and column electrodes 38 respectively by row drivers 39 and column drivers 40. The matrix of pixels 36 is addressed on a line-by-line basis by applying voltage waveforms, termed strobe waveforms, serially to the row electrodes 37 while voltage waveforms, termed data waveforms, are applied in parallel to the column electrodes 38. The resultant waveform across a pixel defined by a row electrode and a column electrode is given by the potential difference between the waveform applied to that row electrode and the waveform applied to that column electrode. The row electrode to which a strobe waveform is being applied is termed the 'selected row' or 'selected electrode'.

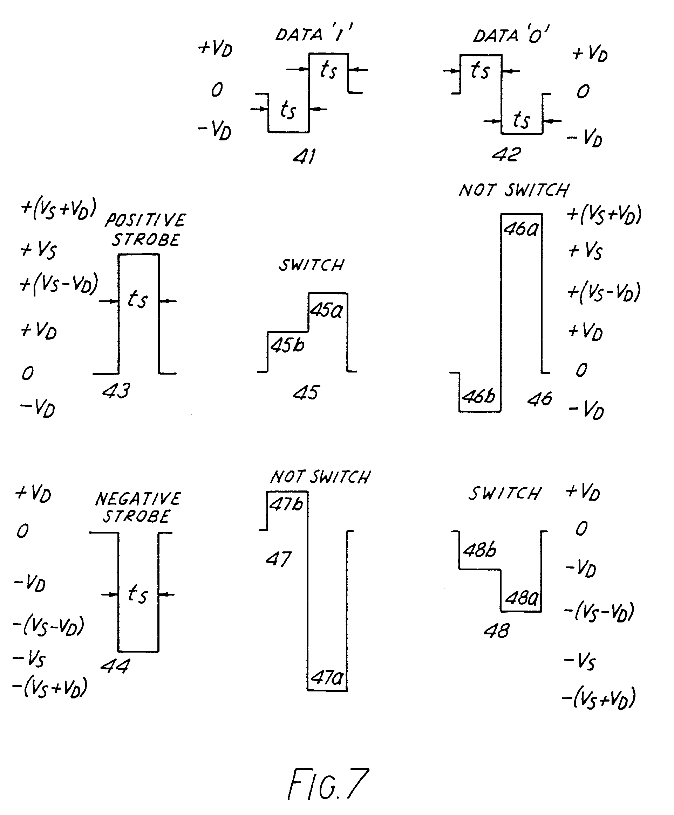

A scheme for addressing the liquid crystal cell by the method of the present invention is depicted in Figure 7. This scheme is similar to that depicted in Figure 1 in that it uses symmetric bipolar data waveforms 41, 42 to co-act with positive going and negative-going unipolar strobe waveforms 43 and 44. However a different use is made of the waveforms produced across each pixel.

As can be seen, the data waveforms 41, 42 (arbitrarily designated data '1' and '0' waveforms respectively) are of opposite sense. Each data waveform 41, 42 is charge-balanced and bipolar, comprising data pulses of voltage magnitude V_{D} and duration tₛ. The strobe waveforms 43 and 44 comprise pulses of voltage +V_{S} and -V_{S} respectively, both of duration tₛ. In principle, the strobe pulse 43, 44 can be synchronised with either the first or second pulse of the data waveforms; synchronisation with the second pulse is exemplified in the present instance.

Figure 7 also shows the resulting waveform produced across a pixel 36aa defined by a selected row electrode 37a, to which a strobe waveform has been applied, and a column electrode 38a, to which a data waveform has been applied. In the case where a positive strobe waveform has been applied to the selected row electrode 37a, the application of a data '1' waveform 41 to the column electrode 38a produces a positive switching pulse 45 of duration 2tₛ including a positive component 45a of voltage magnitude (V_{S} - V_{D}) while the application of a data '0' waveform 42 produces a non-switching waveform 46 including a positive non-switching pulse 46a of voltage magnitude (V_{S} + V_{D}) and duration tₛ. Similarly in the case where a negative strobe waveform has been applied to the selected row electrode 37a, the application of a data '1' waveform 41 produces a negative non-switching waveform 47 including a non-switching pulse 47a of voltage magnitude (V_{S} + V_{D}) and duration tₛ while the application of a data '0' waveform 42 produces a negative switching pulse 48 of duration 2tₛ including a negative component 48a of voltage magnitude (V_{S} - V_{D}). On the selected rows to which a strobe waveform is not being applied, the resulting waveform across the pixels is simply the data waveform as applied to the respective column electrodes, but inverted, which is not capable of switching the pixel.

Accordingly with reference also to Figure 4, the pulses 45, 48 of duration 2tₛ and comprising a component 45a, 48a of voltage magnitude (V_{S} - V_{D}), have an operating point in switching zone C and so are switching pulses. The pulses 46a, 47a of duration tₛ, less than 2tₛ, and voltage magnitude (V_{S} + V_{D}), greater than (V_{S} - V_{D}), have an operating point in the non-switching zone D and so are non-switching pulses. The pulses V_{D} of duration tₛ in the data waveforms (on the non-selected rows) have an operating point in the non-switching zone E.

When using the strobe and data pulses of Figure 7 a complete refreshing of the cell requires two addressing cycles, one with positive-going strobe pulses 43 which are used for selectively switching those pixels required to be switched into their data '1' states, and the other with negative-going strobe pulses 44 which are used for selectively switching those pixels required to be switched into their data 'O' states. As an alternative to this form of selective switching performed twice over, a blanking operation may be employed in which all the pixels of a line, group of lines, or the entire page, may be set simultaneously into one of the data states, this blanking being followed by a single selective addressing for switching only those pixels required to be set into the other data state.

It can be seen from curve 20 of Figure 4 that, by arranging the pulse durations and voltage such as to provide an operating point for (V_{S}-V_{D}) lying safely inside curve 20 near its positive gradient, the fulfilling of the requirement that V_{D} shall not be too small in relation to V_{S} serves to assist the discrimination afforded by the addressing method.

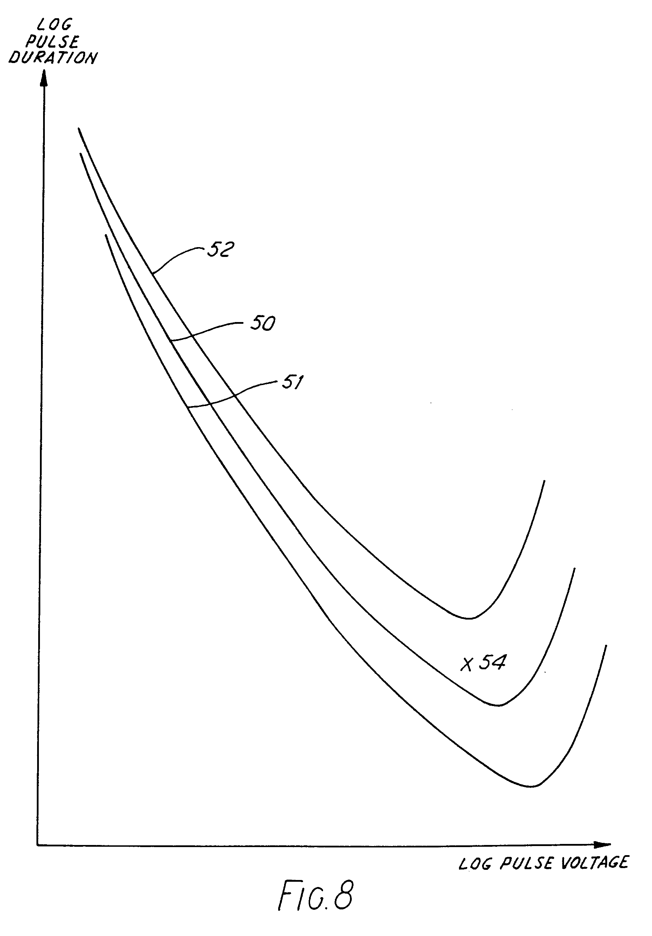

Another analysis of the inter-relationship of pulse duration and pulse voltage magnitude is depicted in Figure 8 and described with respect to the waveform scheme of Figure 7. The pulse 45, 48 of Figure 7 can be considered as being formed of two components, the component 45a, 48a which is immediately preceded by a component 45b, 48b of the same polarity but a smaller amplitude V_{D}. The waveform 46, 47 can also be considered as being formed of two components, - in fact, pulses - the pulse 46a, 47a which is immediately preceded by a pulse 46b, 47b of the opposite polarity and a smaller amplitude V_{D}. A pixel exposed to an isolated pulse of constant pulse height has a characteristic curve e.g. as depicted at 50. A pixel exposed to a pulse component immediately preceded by a pulse component of the same polarity but a smaller amplitude V_{D} has a characteristic given by a curve of shape similar to curve 50 but translated downwardly and slightly to the right with respect thereto, such as curve 51. A pixel exposed to a pulse immediately preceded by a pulse of the opposite polarity and a smaller amplitude V_{D} has a characteristic given by a curve of shape similar to curve 50 but translated upwardly and slightly to the left with respect thereto, such as curve 52.

Now considering operation when multiplexing with waveforms as depicted in Figure 7, (V_{S} - V_{D}) is preceded by a component of the same polarity, 45b, 48b, and it will have a switching characteristic as shown in curve 51. (V_{S} + V_{D}) is preceded by a pulse of opposite polarity, 46b, 47b and it will have a switching characteristic as shown in curve 52. By arranging the pulse durations and voltages such as to provide an operating point 54 for (V_{S} - V_{D}) inside the curve 51 corresponding to a pulse duration less than that of the minimum of curve 52 then the operating point for (V_{S} + V_{D}) cannot lie within curve 52 and hence cannot lead to spurious switching.

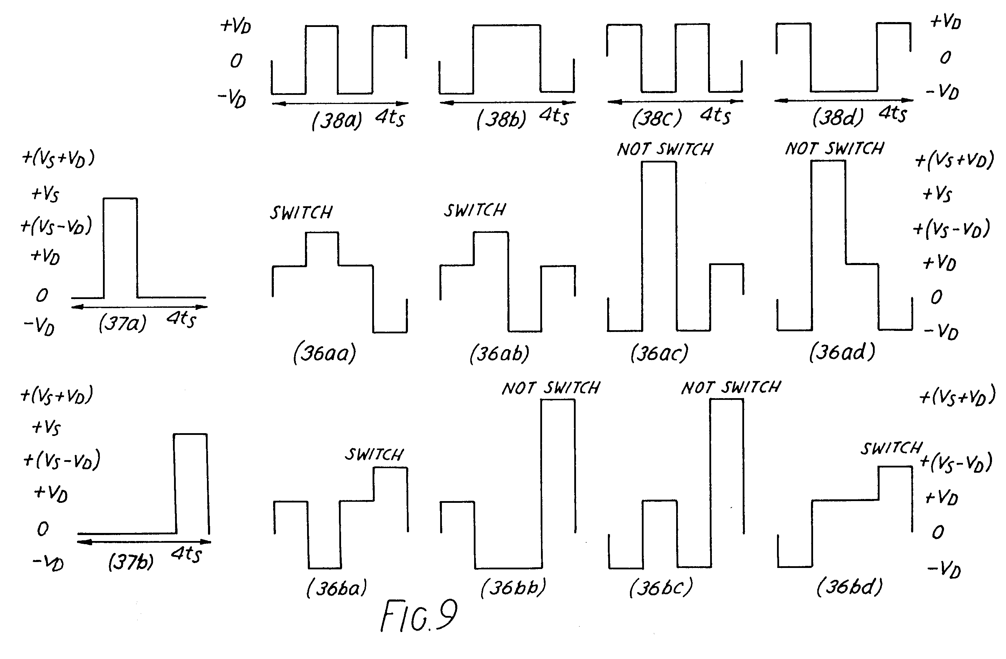

Even though (V_{S} + V_{D}) cannot itself lead to spurious switching, there is still the requirement that signals other than (V_{S} + V_{D}) and (V_{S} - V_{D}) should not give rise to spurious switching. Figure 9 shows the resulting waveforms across the pixels 36aa, 36ab, 36ac, 36ad, 36ba, 36bb, 36bc and 36bd when data waveforms are applied to the column electrodes 38a, 38b, 38c and 38d while waveforms including strobe pulses are applied to the row electrodes 37a and 37b. (The reference in brackets below a waveform indicates to which electrode it has been applied or across which pixel it has been produced). In effect, the Figure shows, for a positive strobe pulse, the possible waveforms that can be produced when, on a column electrode, a data waveform to produce a switching or non-switching waveform is preceded or followed by either one of the possible data waveforms '0' or '1'.

Waveforms which may lead to spurious switching are those across pixels referenced at 36ad and 36bb and those produced across pixels on rows unselected for two line address times and having the data waveform combinations referenced as 38b and 38d. The risk of the waveform at 36ad switching incorrectly can be eliminated by ensuring that the characteristic curve of the liquid crystal material used has a steep positive gradient so that pulses including a pulse component of voltage magnitude (V_{S} + V_{D}) and a duration of tₛ or 2tₛ do not switch (ie the operating points for durations tₛ and 2tₛ are in the non-switching zone D). The waveforms referenced at 36bb, 38b and 38d each have a pulse of amplitude V_{D} and duration 2tₛ. V_{D} must be chosen in relation to tₛ to ensure that these waveforms do not switch (i.e. the operating point for a pulse of amplitude V_{D} and duration 2tₛ is in the non-switching zone E) and also to ensure that the resulting optical response does not seriously degrade the contrast.

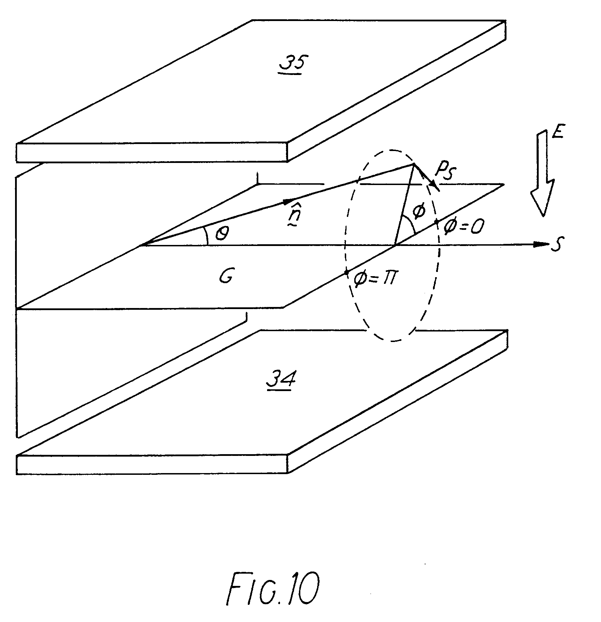

The ability to produce selective switching with a pulse of one amplitude inducing switching, while another pulse of the same or less duration but greater amplitude does not induce switching, is associated with the existence of a positive gradient portion in the characteristic curve 20 of Figure 4. It is believed that some characteristic curves exhibit minima, and hence regions of positive and negative gradient, as the direct result of the conflicting torques arising from the interaction of an applied electric field (E) with the dielectric anisotropy (Δε) and with the spontaneous polarisation (Pₛ) contributions to the electrostatic free energy (Fₑ). Figure 10 shows that the electric field E is applied between the members of the first set of electrodes in the electrode layer 34 and the members of the second set of electrodes in the electrode layer 35. Referring still to Figure 10, if ϑ is the tilt angle of the smectic (the angle between the molecular director n and the smectic layer normal S), if φ is the azimuthal angle of the molecular director (the angle between the plane G parallel to the glass substrate containing the smectic layer normal and the plane containing both the smectic layer normal and the molecular director n), and if εₒ is the permitivity of free space, then the electrostatic free energy (Fₑ) is given by:-

${\text{F}}_{\text{e}} {\text{= -P}}_{\text{s}} \text{E cosφ -} \frac{\text{1}}{\text{2}} {\text{ε}}_{\text{o}} \text{Δε E²sin²ϑ sin²φ}$

and the resulting torque (Ω) is given by 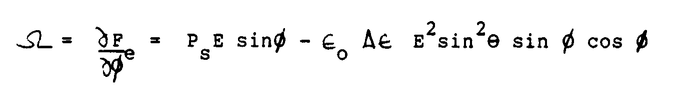
When an electric field is applied to a pixel of the cell in such a direction as to switch the molecular director from an azimuthal angle φ = π(corresponding to one stable state) to the azimuthal angle φ = o (corresponding to the other stable state), the pulse duration required to accomplish this switching will be dependent upon the torque (Ω). From experimental studies it appears that the minimum required pulse duration for an isolated pulse occurs at a value of applied electric field (Eₘᵢₙ) that is approximately such as to give rise to the maximum slope of the torque close to φ = π.

Thus the electric field that provides minimum required pulse duration occurs when:-

$\frac{\text{∂}}{\text{∂E}} \text{(} \frac{\text{∂Ω}}{\text{∂φ}} \text{) = O For φ = π}$
$\text{(} \frac{\text{∂Ω}}{\text{∂φ}} {\text{) = P}}_{\text{s}} {\text{E cosφ - ε}}_{\text{o}} \text{Δε ²sin²ϑcos2φ}$
$\frac{\text{∂}}{\text{∂E}} \text{(} \frac{\text{∂Ω}}{\text{∂φ}} {\text{) = P}}_{\text{s}} {\text{cosφ - 2 ε}}_{\text{o}} \text{ΔεE sin²ϑcos2φ}$
$\text{When φ = π and} \frac{\text{∂}}{\text{∂E}} \text{(} \frac{\text{∂Ω}}{\text{∂φ}} \text{) = O}$
${\text{E = E}}_{\text{min}} {\text{= - P}}_{\text{s}} {\text{/ (2ε}}_{\text{o}} \text{Δε sin²ϑ) (1)}$

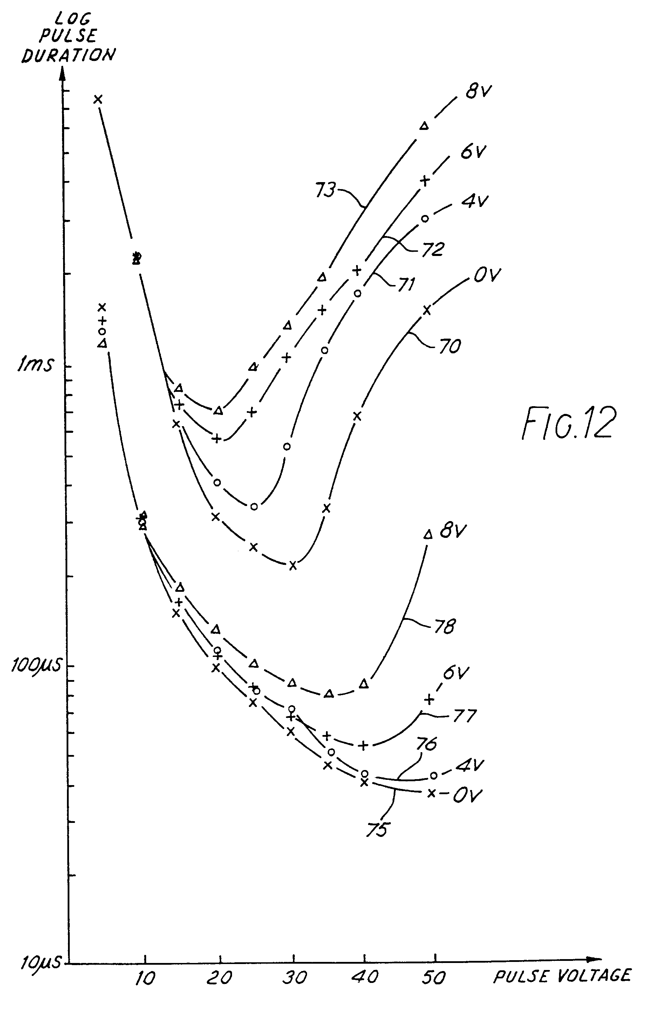

If switching does not take place from φ = π to O but over a reduced azimuthal angle then Eₘᵢₙ will be shifted to a higher voltage and ultimately will not occur at all. Thus it can be seen that the purpose of the opposite polarity pulse, or AC bias (see Figure 12), is to drive, or hold, respectively, the director in a condition in which φ approaches O or π.

Equation (1) indicates that the value of Eₘᵢₙ is dependent upon Pₛ and Δε which are properties of the liquid crystal material used. Accordingly, a suitable ferroelectric liquid crystal material for use in a matrix-array type liquid crystal cell addressed by the method of the present invention is one for which the values of Pₛ (spontaneous polarisation) and Δε (dielectric anisotropy) are such that Eₘᵢₙ exists and has a suitable value.

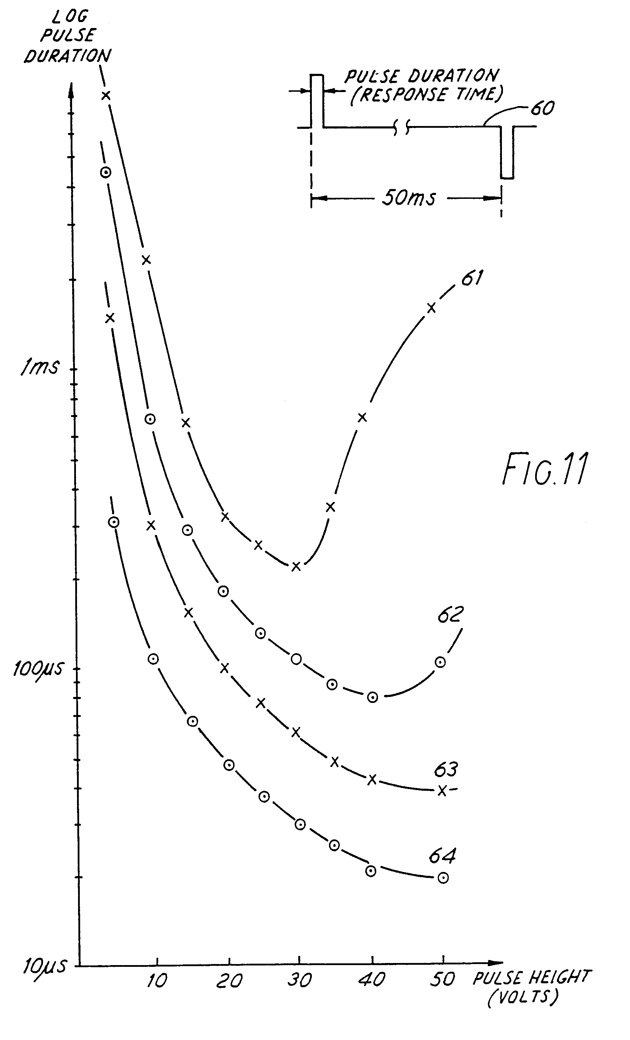

Dependence of Eₘᵢₙ upon Pₛ is illustrated in Figure 11 which shows the characteristics measured at 20°C in a 2µm thick cell for a set of mixtures all having the same negative dielectric anisotropy (ΔεX - 1.9) but different values of Pₛ. The different Pₛ values were obtained by diluting a specific fluorinated biphenyl ester ferroelectric material supplied by BDH of Poole, Dorset and identified as M679 with different proportions of a racemic version of the same ester identified as M679R, as follows:

| Curve | % Proportion M679 | % Proportion M679R | Pₛ/(nC/cm²) |
|---|---|---|---|
| 61 | 25 | 75 | 5.5 |
| 62 | 35 | 65 | 7.5 |
| 63 | 50 | 50 | 13.5 |
| 64 | 75 | 25 | 18 |

The transition temperatures for this material are

${\text{S}}_{\text{c}} {\text{-(96°C) - S}}_{\text{A}} \text{- (114°C) - N - (145°C) - I}$

These characteristic curves are for isolated pulses and were obtained using a waveform schematically depicted at 60 comprising pulses of alternating polarity with a pulse repetition frequency of 20Hz. The curves illustrate that with a Pₛ of about 5.5 nC/cm² (55 µC/m²) for a material with a dielectric anisotropy $\text{Δ ε≈-1.9}$ 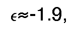 , Eₘᵢₙ is fairly sharply defined, occuring at a pulse duration (response time) in the neighbourhood of 200 µs at a field strength of about 15 volts/µm. When the value of Pₛ is increased to about 7.5nC/cm² (75µC/m²), Eₘᵢₙ is less sharply defined and occurs at a response time in the neighbourhood of 80µs at a field strength of about 20 volts/µm. By increasing the value of Pₛ to 13.5nC/cm² (135 µC/m²) the response time at a field strength of 25 volts/µm is less than 30 µs, but Eₘᵢₙ appears to be somewhat higher.

Reverting attention to Equation (1), if speed of addressing a display is of particular importance, the values of the strobe and data pulse voltages are chosen so that (V_{S} - V_{D}) develops a field strength substantially matched with Eₘᵢₙ. Having regard to the limitations of drive circuitry, it is typically found desirable to employ pulse amplitudes for V_{S} and for V_{D} not exceeding about 50 volts and hence, respecting this limitations, for a given value of cell thickness and liquid crystal tilt angel ϑ, the derived formula for Eₘᵢₙ there is seen to be a limited upper value to the value of the ratio Pₛ/Δε.

The characteristic curves of Figure 11 were obtained using isolated pulses, but in the normal line-by-line addressing of the pixels of a display, as illustrated in the waveform scheme of Figure 7, there is liable to be a continuous data stream which produces the effect of setting the addressing pulses against a background of alternating potential. This modifies the characteristic curves to those depicted in Figure 12 which shows the effect of increasing the amplitude of the background alternating potential. Traces 70, 71, 72 and 73 depict characteristic curves for the 25% M679 : 75% M679R mixture of Figure 11. Trace 70 depicts the characteristic curve using the waveform 60 of Figure 11 in the presence of no background alternating potential, while curves 71, 72 and 73 depict the characteristic curves using the waveform 60 in the presence of a background alternating potential respectively of ± 4 volts ± 6 volts and ± 8 volts, this background alternating potential having a fundamental periodicity equal to twice the pulse duration. Traces 75, 76, 77, and 78 depict characteristic curves corresponding to traces 70 to 73, but in respect of a 50% M679 : 50% M679R mixture instead of the 25% : 75% mixture. From these curves it is seen that one of the effects of a background alternating potential is to increase the response time. This is not generally an advantage, but another effect can be to sharpen up the minimum as particularly illustrated in the case of the 50% : 50% mixture, and this is beneficial.

Accordingly, a factor which may be taken into account when choosing appropriate values of strobe and data pulse voltages, is that the data stream applied in parallel to all the column electrodes provides the non-addressed pixels with an alternating voltage component that tends to stabilise the non-addressed pixels in their fully switched states. If the amplitude of this stabilising field is too small to be effective on its own, it may be supplemented with an additional alternating signal. Such a signal can be applied as an A.C. waveform superimposed on the waveform applied across the pixels and having a frequency equal to or greater than the fundamental frequency of the data waveform. Typically, the frequency of the AC signal is an even multiple of the fundamental frequency.

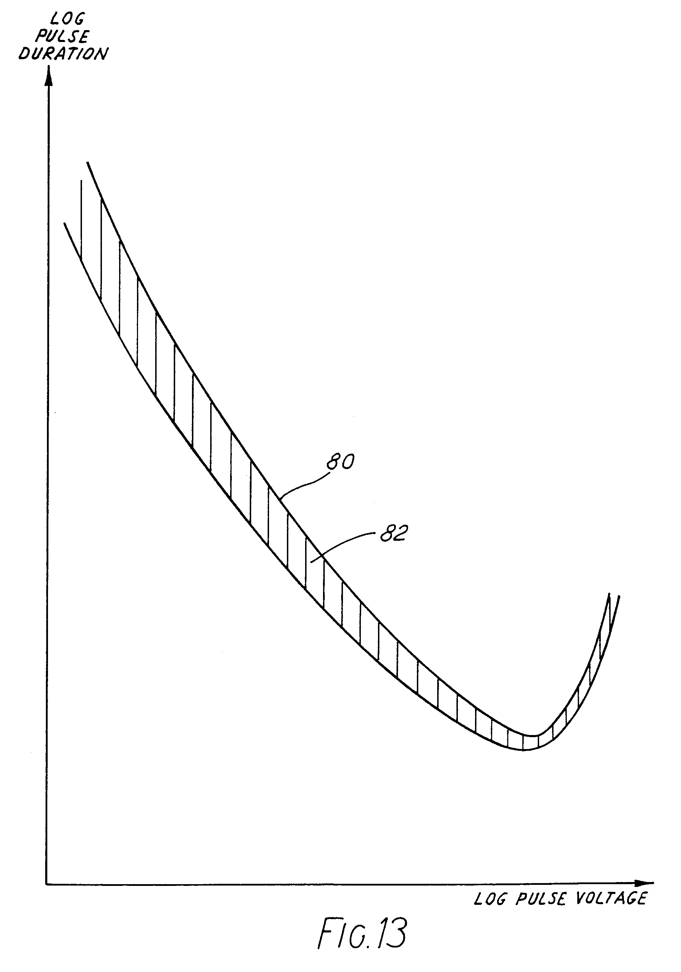

Mention should also be made of the fact that the characteristic of a ferroelectric liquid crystal material is more accurately represented by the curve 80 of Figure 13. The shaded region 82 represents combinations of pulse duration and voltage magnitude which can cause only parts of a pixel to switch. As shown in Figure 13, the shaded region 82 is narrow when the gradient of the curve 80 is steep and broader when the gradient is more shallow. Accordingly, the risk of partial switching in the method of the present invention is reduced if the characteristic of the material used has a steep positive gradient.

## Claims

1. A method of addressing a matrix-array type liquid crystal cell (30) with a layer of ferroelectric liquid crystal material having a plurality of pixels (36) defined by areas of overlap between members of a first set of electrodes (37) on one side of the layer and members of a second set of electrodes (38) on the other side of the layer, each of the pixels (36) being switchable between a first and a second optical state by application of a voltage thereacross for a minimum duration, dependent on the magnitude of the voltage across the pixels (36), in which method a strobe voltage (±V_{S}) is serially applied to the members of the first set of electrodes (37) and data voltages (±V_{D}) are simultaneously applied in parallel to the second set of electrodes (38) to produce resultant voltages (±V_{S}±V_{D}) across the pixels (36) corresponding to a given selected member of the first set of electrodes (37) and thereby switch or non-switch these pixels (36) in dependence upon whether the corresponding data voltages (±V_{D}) are of first or second kinds respectively, characterised in that the liquid crystal material is such that the dependence of the minimum duration on the magnitude of the voltage across the pixels (36) exhibits a minimum at a particular voltage, in that the combination of the strobe voltage (±V_{S}) and a data voltage (±V_{D}) of the first kind produces a resultant switching pulse of a given voltage magnitude ${\text{(±(V}}_{\text{S}} {\text{-V}}_{\text{D}} \text{))}$ and a given duration, and in that the combination of the strobe voltage (±V_{S}) and a data voltage (±V_{D}) of the second kind produces a non-switching pulse of a voltage magnitude ${\text{(±(V}}_{\text{S}} {\text{+V}}_{\text{D}} \text{))}$ greater than the given voltage magnitude ${\text{(±(V}}_{\text{S}} {\text{-V}}_{\text{D}} \text{))}$ and of a duration less than or equal to the given duration and wherein the voltage magnitude ${\text{(±(V}}_{\text{S}} {\text{+V}}_{\text{D}} \text{))}$ of the non-switching pulse is equal to or greater than the magnitude of the particular voltage.

2. A method according to claim 1 wherein the data voltages (±V_{D}) comprise charge-balanced bipolar pulses.

3. A method according to claim 2 wherein the data voltages (±V_{D}) of the first kind are complimentary to the data voltages (±V_{D}) of the second kind.

4. A method according to any one of the preceding claims wherein the strobe voltage (±V_{S}) is unipolar.

## Patentansprüche

1. Verfahren zum Adressieren einer Flüssigkristallzelle (30) vom Matrix-Gruppentyp mit einer Schicht aus ferroelektrischem Flüssigkristallmaterial, die eine Vielzahl von Pixeln (36) hat, die durch Überlappungsbereiche zwischen Elementen einer ersten Gruppe von Elektroden (37) auf einer Seite der Schicht und Elementen einer zweiten Gruppe von Elektroden (38) auf der anderen Seite der Schicht definiert werden, wobei jedes Pixel (36) zwischen einem ersten und einem zweiten optischen Zustand durch Anlegen einer Spannung während einer minimalen Dauer, die von der Größe der Spannung an den Pixeln abhängt, umschaltbar ist, wobei in dem Verfahren eine Ansteuerspannung (±V_{S}) seriell der ersten Gruppe von Elektroden (37) und gleichzeitig Datenspannungen (±V_{D}) parallel der zweiten Gruppe von Elektroden (38) zugeführt werden, um über den Pixeln (36) resultierende Spannungen (±V_{S}±V_{D}) zu erzeugen, die einem gegebenen ausgewählten Element in der ersten Gruppe von Elektroden (37) entsprechen und dadurch die Pixel (36) in Abhängigkeit davon zu schalten oder nicht zu schalten, ob die entsprechenden Datenspannungen (±V_{D}) von erster bzw. zweiter Art sind, dadurch gekennzeichnet, daß das Flüssigkristallmaterial so ist, daß die Abhängigkeit der minimalen Dauer von der Größe der Spannung über den Pixeln 36 ein Minimum bei einer bestimmten Spannung aufweist, daß die Kombination der Ansteuerspannung (±V_{S}) und einer Datenspannung (±V_{D}) der ersten Art einen resultierenden Schaltimpuls mit einer gegebenen Spannungsgröße ${\text{(±(V}}_{\text{S}} {\text{-V}}_{\text{D}} \text{))}$ und einer gegebenen Dauer erzeugt, und daß die Kombination der AnSteuerspannung (±V_{S}) und einer Datenspannung (±V_{D}) der zweiten Art einen Nicht-Schaltimpuls mit einer Spannungsgroße ${\text{(±(V}}_{\text{S}} {\text{+V}}_{\text{D}} \text{))}$ , die größer als die gegebene Spannungsgröße ${\text{(±(V}}_{\text{S}} {\text{-V}}_{\text{D}} \text{))}$ ist, und mit einer Dauer, die kleiner ist als die gegebene Dauer, erzeugt, und wobei die Spannungsgröße des Nicht-Schaltimpulses gleich oder größer als die Größe der bestimmten Spannung ist.

2. Verfahren nach Anspruch 1, bei dem die Datenspannungen (±V_{D}) in der Ladung ausgeglichene bipolare Impulse sind.

3. Verfahren nach Anspruch 2, bei dem die Datenspannungen (±V_{D}) der ersten Art komplementär zu den Datenspannungen (±V_{D}) der zweiten Art sind.

4. Verfahren nach einem der vorhergehenden Ansprüche, bei dem die Ansteuerspannung (±V_{S})) unipolar ist.

## Revendications

1. Procédé d'adressage d'une cellule à cristaux liquides de type tableau de matrice (30) avec une couche de matériau à cristaux liquides ferroélectrique comportant plusieurs pixels (36) définis par des zones de recouvrement entre les organes d'un premier ensemble d'électrodes (37) situé d'un côté de la couche, et les organes d'un second ensemble d'électrodes (38) situé de l'autre côté de la couche, chacun des pixels (36) pouvant être commuté entre un premier et un second états optiques par application d'une tension à travers ceux-ci pendant une durée minimum, dépendant de l'amplitude de la tension aux bornes des pixels (36), dans lequel procédé une tension stroboscopique (±Vₛ) est appliquée en série aux organes du premier ensemble d'électrodes (37) et des tensions de données (±Vₚ) sont appliquées simultanément en parallèle au second ensemble d'électrodes (38), pour produire des tensions résultantes (±Vₛ±Vₚ) aux bornes des pixels (36), correspondant à un organe sélectionné donné du premier ensemble d'électrodes (37) et par ce moyen commuter ou ne pas commuter ces pixels (36), selon que les tensions de données correspondantes (±Vₚ) sont respectivement de la première ou de la seconde sorte, caractérisé en ce que le matériau à cristaux liquides est tel que la dépendance de la durée minimum de l'amplitude de la tension aux bornes des pixels (36) présente un minimum à une tension particulière, en ce que l'association de la tension stroboscopique (±Vₛ) et d'une tension de données (±Vₚ) de la première sorte produit une impulsion de commutation résultante d'une amplitude de tension donnée (±(Vₛ-Vₚ)) et d'une durée donnée, et en ce que l'association de la tension stroboscopique (±Vₛ) et d'une tension de données (±Vₚ) de la seconde sorte produit une impulsion de non-commutation d'une amplitude de tension ${\text{(±(V}}_{\text{s}} {\text{+V}}_{\text{p}} \text{))}$ supérieure à l'amplitude de tension donnée ${\text{(±(V}}_{\text{s}} {\text{-V}}_{\text{p}} \text{))}$ et d'une durée inférieure ou égale à la durée donnée, et dans lequel l'amplitude de la tension ${\text{(±(V}}_{\text{s}} {\text{+V}}_{\text{p}} \text{))}$ de l'impulsion de non-commutation est égale ou supérieure à l'amplitude de la tension particulière.

2. Procédé selon la revendication 1, dans lequel les tensions de données (±Vₚ) comportent des impulsions bipolaires équilibrées en charges.

3. Procédé selon la revendication 2, dans lequel les tensions de données (±Vₚ) de la première sorte sont complémentaires des tensions de données (±Vₚ) de la seconde sorte.

4. Procédé selon l'une quelconque des revendications précédentes, dans lequel la tension stroboscopique (±Vₛ) est unipolaire.
